# EUROPEAN PATENT SPECIFICATION

(11) **EP 0 677 237 B1**
(45) Date of publication and mention of the grant of the patent: **05.03.1997**
(21) Application number: 95200943.9
(22) Date of filing: 13.04.1995
(51) Int. Cl.: A01C 3/02, A01K 1/01

(54) **A manure processing system**
System für die Behandlung von Flüssigmist
Système de traitement de purin

(30) Priority: 15.04.1994 NL 9400596
(43) Date of publication of application: 18.10.1995
(73) Proprietor: Claesen, Robertus Maria, NL-5427 PW Boekel (NL)
(72) Inventor: Claesen, Robertus Maria, NL-5427 PW Boekel (NL)
(74) Representative: Van kan, Johan Joseph Hubert, Ir.

(56) References cited:
- DE-A- 2 928 627
- DE-A- 2 942 558
- DE-A- 3 006 407
- DE-A- 3 047 192
- NL-A- 8 902 367
- NL-A- 9 100 631

## Description

The invention relates to a manure processing system comprising a manure storage space as well as a manure cooling device.

With such a manure processing system, which is known from German Patent DE-A-30.47.192, manure from animals is brought into a manure storage space separated from the animal accommodation and cooled by means of a manure cooling device comprising a heat exchanger. The heat exchanger comprises cooling pipes, which are provided at a fixed location in the manure storage space. A cooling liquid is passed through said cooling pipes, by means of which the manure is cooled. As a result of the cooling of the manure the amount of ammonia being emitted will be reduced. The degree of cooling depends on the reduction in the emission of ammonia that is to be effected.

A drawback of the known manure cooling device is that when the manure storage space is not entirely filled part of the cooling pipes are not surrounded by manure and thus do not perform a manure cooling function.

The object of the invention is to provide a manure processing system wherein the extent to which the manure cooling device is surrounded by the manure present in the manure storage space is constantly the same.

This objective is accomplished with a manure processing system according to the invention in that said manure cooling device comprises at least one floatable cooling element present in the manure storage space.

In use the cooling element floats on the manure and will constantly cool the same amount of manure, irrespective of the amount of manure that is present inside the manure storage space. When the manure storage space is located under a perforated floor on which the animals are present, the manure from the animals will fall directly through the perforated floor into the manure storage space. In that case the floating cooling element will be present in the uppermost, fresh and mostly warm layer of manure at all times, as a result of which an effective cooling is obtained. Thus it is achieved that the manure and the urine are cooled directly after being excreted, when their temperature is highest and the emission level is highest, resulting in a considerably reduced emission of ammonia.

One embodiment of the manure processing system according to the invention is characterized in that in use the plate-shaped cooling element extends substantially parallel to the surface of the manure present in the manure storage space.

The cooling element may simply be placed on the manure thereby.

Another embodiment of the manure processing system according to the invention is characterized in that in use the plate-shaped cooling element extends at an angle with the surface of the manure present in the storage space.

By placing a cooling element at an angle it has become possible to provide a plurality of cooling elements in the manure, whereby the surface area of the cooling elements is considerably larger than the surface area of the manure, as a result of which a relative great cooling effect is obtained.

Another embodiment of a manure processing system according to the invention is characterized in that the manure cooling device is provided with circulating means for circulating a cooling liquid through the cooling element.

As a result of this an effective cooling of the uppermost layer of manure is achieved. The cooling liquid may be water, a coolant or groundwater. The advantage of using groundwater is that cooling water is available at all times.

The depth of the groundwater bore depends on the temperature of the water to be pumped. The water being pumped up is stored in an insulated storage tank, where additional cooling may take place. From said storage tank the water is pumped through the cooling elements by means of pumps and insulated supply and discharge pipes. The return water may for example land in another insulated storage tank, from where it may be used as drinking water having a temperature which is for example about 2 °C higher than at the time of being pumped up from the ground. Eventually, remaining water can be discharged of.

The invention will be explained in more detail hereafter with reference to the drawing, in which:
Figure 1 is an embodiment of a manure processing system according to the invention;
Figure 2 is a cross-sectional view of a manure storage space;
Figure 3 is a plan view of the manure storage space shown in Figure 2;
Figure 4 is a cross-sectional view of a cooling element; and
Figure 5 is a cross-sectional view of another embodiment of a manure processing system according to the invention.

In the Figures like parts are numbered alike.

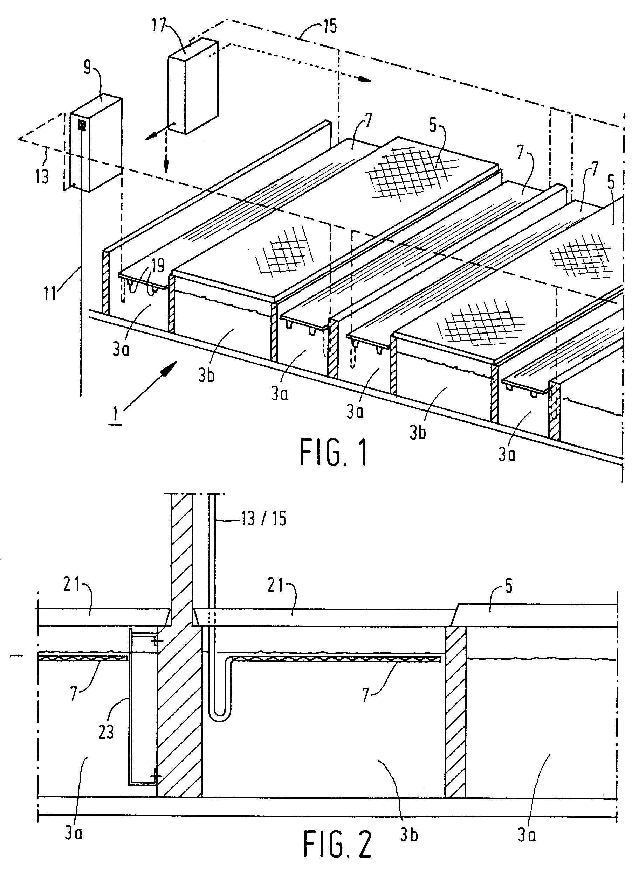

Figure 1 shows a manure processing system comprising a storage space 3a, 3b for manure from animals. In a pig feeding farm, for example, the animals are present on a grid 5 located above the manure storage space 3a, 3b. Cooling elements 7 are present inside the storage space 3a. Via a pipe 11 groundwater is pumped up by means of a pump into a first storage tank 9. Then the groundwater is supplied to the cooling elements via a pipe 13. At the other end of the cooling elements the water is supplied to a second storage tank 17 via a pipe 15. From said second storage tank 17 the water (about 2 °C warmer) may either be used as drinking water for the animals, or be resupplied to the pipe 13 or the storage tank 9 in order to be reused for the cooling of the manure, or be returned into the ground. The cooling elements 7 may be provided with stabilizers 19, in order to prevent the cooling elements floating on the manure from tilting under the influence of the manure.

Figure 2 shows an embodiment of a cross-section of the storage spaces 3a and 3b. In this embodiment a concrete grid or wire grate 21 is provided above the cooling elements 7. The water supply and discharge pipes 13 and 15 respectively are provided with a flexible hose near the connection to the cooling element, as a result of which the cooling element is able to follow the manure level without being impeded by the pipes 13 and 15. Figure 2 furthermore shows a spacer 23, which functions to keep the cooling element in the storage space 3a at (substantially) the same distance from a wall.

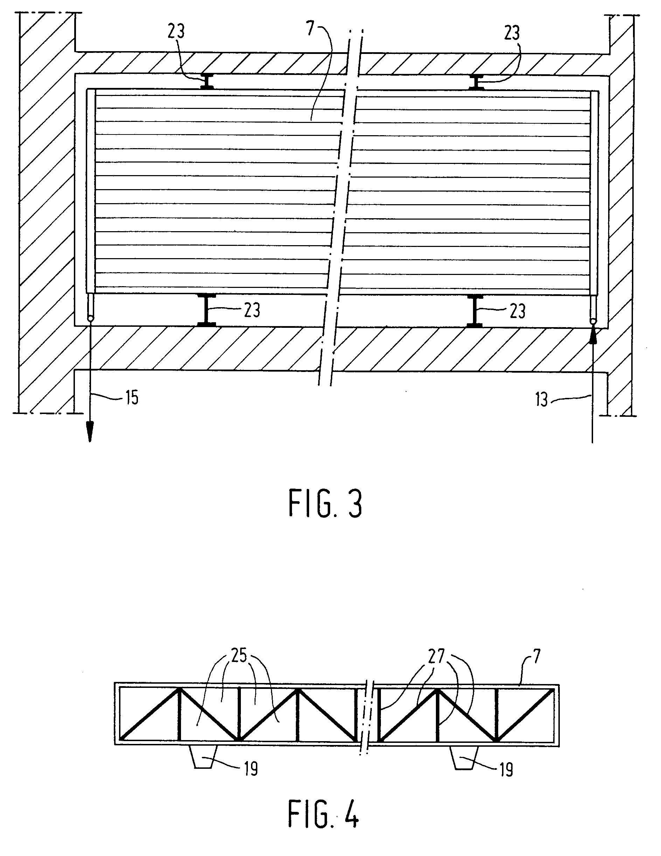

Figure 3 shows an embodiment of a plan view of a storage space 3a with the cooling element 7. Four spacers 23 are shown in this embodiment.

Figure 4 shows a cross-section of a cooling element 7. This embodiment of the cooling element 7 comprises water passageways 25, which are bounded by partitions 27.

The Figures do not show how the manure processing system is controlled. One embodiment comprises a sensor which registers the temperature in the storage space and delivers it to a control box (for example comprising a computer). If the temperature becomes too high, the control box may for example increase the velocity at which the water is circulated, or provide additional cooling of the water in storage tank 9 or 17, or pump up (new) groundwater via storage tank 9 and subsequently supply said groundwater to the cooling elements.

The manure processing system may be provided with additional cooling elements at the sides of the storage spaces 3a and 3b.

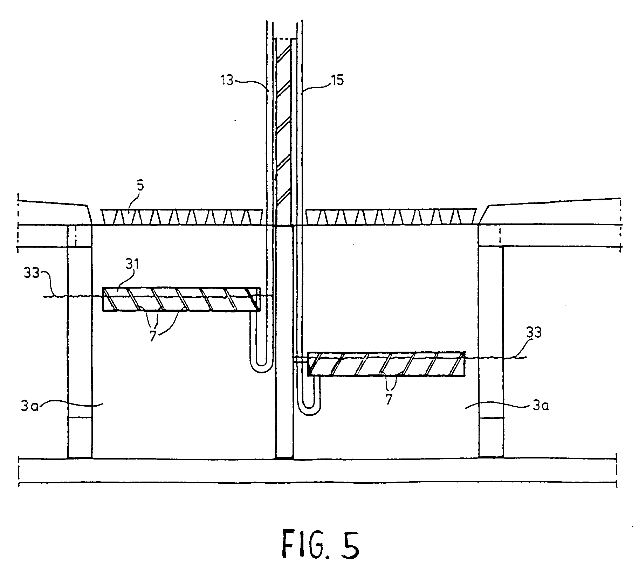

Figure 5 shows another embodiment of a manure processing system according to the invention.

The cooling elements 7 are detachably secured in a comb-like holder 31 near their ends. The cooling elements 7 extend at an angle of for example 60 ° with respect to the manure surface 33, as a result of which a larger cooling area can be obtained than is the case when horizontally extending cooling elements are used. The holder 31 and the cooling elements float together on the manure present in the manure storage spaces 3a. The cooling elements 7 partially extend above the manure surface 33 thereby. Condensate forms on the parts of the relatively cold cooling elements 7 extending above the manure surface 33, which condensate absorbs part of the ammonia and which is subsequently precipitated in the manure storage space.

## Claims

1. A manure processing system comprising a manure storage space (3a) as well as a manure cooling device (7), characterized in that said manure cooling device comprises at least one floatable cooling element present in the manure storage space.

2. A manure processing system according to claim 1, characterized in that in use the plate-shaped cooling element extends substantially parallel to the surface of the manure present in the manure storage space.

3. A manure processing system according to any one of the preceding claims, characterized in that in use the plate-shaped cooling element extends at an angle with the surface of the manure present in the storage space.

4. A manure processing system according to any one of the preceding claims, characterized in that in use the manure cooling device extents partly above the surface of the manure present in the storage space.

5. A manure processing system according to claim 3 or 4, characterized in that said manure cooling device is provided with a comb-like holder (31), in which said cooling element is detachably secured.

6. A manure processing system according to any one of the preceding claims, characterized in that said manure cooling device is provided with circulating means for circulating a cooling liquid through said cooling element.

7. A manure processing system according to any one of the preceding claims, characterized in that said cooling element is positioned at the same level as or maximally 10 cm below the upper side of the manure in said storage space.

8. A manure processing system according to any one of the preceding claims, characterized in that said cooling element has a specific weight of less than 1.2.

9. A manure processing system according to any one of the preceding claims, characterized in that said cooling element comprises stabilizers (19).

10. A manure processing system according to any one of the preceding claims, characterized in that said manure processing system includes additional cooling means near one edge of said storage space.

11. A manure processing system according to any one of the preceding claims, characterized in that said manure processing system comprises spacers (23) for retaining said cooling element in position.

## Patentansprüche

1. Gülle-Behandlungsanlage mit einem Gülle-Speicherraum (3a) und einer Gülle-Kühleinrichtung (7),
**dadurch gekennzeichnet**,
daß die Gülle-Kühleinrichtung mindestens ein schwimmfähiges Kühlelement aufweist, das in dem Gülle-Speicherraum angeordnet ist.

2. Gülle-Behandlungsanlage nach Anspruch 1,
**dadurch gekennzeichnet**,
daß im Gebrauch das plattenförmige Kühlelement weitgehend parallel zur Oberfläche der in dem Gülle-Speicherraum vorhandenen Gülle ausgerichtet ist.

3. Gülle-Behandlungsanlage nach einem der vorangehenden Ansprüche,
**dadurch gekennzeichnet**,
daß im Gebrauch das plattenförmige Kühlelement unter einem Winkel zu der Oberfläche der in dem Speicherraum vorhandenen Gülle angeordnet ist.

4. Gülle-Behandlungsanlage nach einem der vorangehenden Ansprüche,
**dadurch gekennzeichnet**,
daß im Gebrauch die Gülle-Kühleinrichtung teilweise über den Güllespiegel in dem Speicherraum hinausragt.

5. Gülle-Behandlungsanlage nach Anspruch 3 oder 4,
**dadurch gekennzeichnet**,
daß die Gülle-Kühleinrichtung mit einem kammartigen Halter (31) ausgestattet ist, in welchem das Kühlelement lösbar befestigt ist.

6. Gülle-Behandlungsanlage nach einem der vorangehenden Ansprüche,
**dadurch gekennzeichnet**,
daß die Gülle-Kühleinrichtung mit einer Umwälzeinrichtung zum Umwälzen einer Kühlflüssigkeit durch das Kühlelement ausgerüstet ist.

7. Gülle-Behandlungsanlage nach einem der vorangehenden Ansprüche,
**dadurch gekennzeichnet**,
daß das Kühlelement auf dem gleichen Niveau wie die oder maximal 10 cm unter der Oberseite der Gülle in dem Speicherraum angeordnet ist.

8. Gülle-Behandlungsanlage nach einem der vorangehenden Ansprüche,
**dadurch gekennzeichnet**,
daß das Kühlelement ein spezifisches Gewicht von weniger als 1,2 hat.

9. Gülle-Behandlungsanlage nach einem der vorangehenden Ansprüche,
**dadurch gekennzeichnet**,
daß das Kühlelement Stabilisatoren (19) aufweist.

10. Gülle-Behandlungsanlage nach einem der vorangehenden Ansprüche,
**dadurch gekennzeichnet**,
daß sie zusätzliche Kühleinrichtungen nahe einem Rand des Speicherraums umfaßt.

11. Gülle-Behandlungsanlage nach einem der vorangegehenden Ansprüche,
**dadurch gekennzeichnet**,
daß sie Abstandhalter (23) aufweist, um das Kühlelement in Position zu halten.

## Revendications

1. Système de traitement de purin comprenant un espace de stockage de purin (3a) ainsi qu'un dispositif de refroidissement de purin (7), caractérisé en ce que ledit dispositif de refroidissement de purin comprend au moins un élément de refroidissement flottant présent dans l'espace de stockage de purin.

2. Système de traitement de purin suivant la revendication 1, caractérisé en ce que, en utilisation, l'élément de refroidissement en forme de plaque est sensiblement parallèle à la surface du purin présent dans l'espace de stockage de purin.

3. Système de traitement de purin suivant une quelconque des revendications précédentes, caractérisé en ce que, en utilisation, l'élément de refroidissement en forme de plaque est incliné par rapport à la surface du purin présent dans l'espace de stockage.

4. Système de traitement de purin suivant une quelconque des revendications précédentes, caractérisé en ce que, en utilisation, le dispositif de refroidissement de purin s'étend partiellement au-dessus de la surface du purin présent dans l'espace de stockage.

5. Système de traitement de purin suivant la revendication 3 ou 4, caractérisé en ce que ledit dispositif de refroidissement de purin comporte un support en forme de peigne (31), dans lequel ledit élément de refroidissement est fixé de façon démontable.

6. Système de traitement de purin suivant une quelconque des revendications précédentes, caractérisé en ce que ledit dispositif de refroidissement de purin comporte des moyens de circulation pour faire circuler un liquide de refroidissement à travers ledit élément de refroidissement.

7. Système de traitement de purin suivant une quelconque des revendications précédentes, caractérisé en ce que ledit élément de refroidissement est placé au même niveau ou au maximum à 10 cm au-dessous de la surface supérieure du purin dans ledit espace de stockage.

8. Système de traitement de purin suivant une quelconque des revendications précédentes, caractérisé en ce que ledit élément de refroidissement a une masse spécifique inférieure à 1,2.

9. Système de traitement de purin suivant une quelconque des revendications précédentes, caractérisé en ce que ledit élément de refroidissement comprend des stabilisateurs (19).

10. Système de traitement de purin suivant une quelconque des revendications précédentes, caractérisé en ce que ledit système de traitement de purin comprend des moyens de refroidissement supplémentaires près d'un bord dudit espace de stockage.

11. Système de traitement de purin suivant une quelconque des revendications précédentes, caractérisé en ce que ledit système de traitement de purin comprend des entretoises (23) pour retenir ledit élément de refroidissement en position.
